Europäisches Patentamt

(19) European Patent Office

Office européen des brevets

(11) Numéro de publication: **0 072 728**
**B1**

(12) # FASCICULE DE BREVET EUROPEEN

(45) Date de publication du fascicule du brevet:
29.05.85

(51) Int. Cl.⁴: **H 02 G 15/26**

(21) Numéro de dépôt: **82401442.7**

(22) Date de dépôt: **30.07.82**

(54) **Dispositif permettant d'assurer une légère surpression par rapport à un milieu ambiant, d'un contenant relié à un câble pressurisé, lorsque ce contenant n'admet pas une surpression égale à celle du câble.**

(30) Priorité: **06.08.81 FR 8115274**

(43) Date de publication de la demande:
**23.02.83 Bulletin 83/8**

(45) Mention de la délivrance du brevet:
**29.05.85 Bulletin 85/22**

(84) Etats contractants désignés:
**DE GB IT SE**

(56) Documents cités:
**US - A - 2 449 271**
**US - A - 3 235 651**
**US - A - 3 770 871**

(73) Titulaire: **Tocaven, Jean, Louis, 13, rue du Bon Air,
F-91120 Palaiseau (FR)**

(72) Inventeur: **Tocaven, Jean, Louis, 13, rue du Bon Air,
F-91120 Palaiseau (FR)**

(74) Mandataire: **Mongrédien, André et al, c/o
BREVATOME 25, rue de Ponthieu, F-75008 Paris (FR)**

BUNDESDRUCKEREI BERLIN

## Description

La présente invention a pour objet un dispositif permettant d'assurer une légère surpression, par rapport à un milieu ambiant, d'un contenant relié à un câble pressurisé, lorsque ce contenant n'admet pas une surpression égale à celle du câble, ledit contenant étant protége contre la pression régnant à l'intérieur du câble par des bouchons d'étanchéité, la continuité pneumatique du câble étant assureé grâce à un pontage et la surpression dans le contenant étant détermineé par un détendeur servant à alimenter le contenant à l'aide du gaz present dans le pontage.

Un tel dispositif est connu du document US-A-3 770 871.

Dans le cas de câbles téléphoniques de grande longueur, il est nécessaire, afin d'éviter une dégradation du signal, de disposer de place en place des appareils permettant de limiter l'affaiblissement ou de régénérer ce signal, tels que des bobines de Pupin ou des répéteurs-régénérateurs. Ces dispositifs sont placés à l'intérieur de boîtiers appelés »contenants« qui, du fait de leur technologie ancienne, ne sont pas toujours pressurisables à une valeur de surpression égale à celle qui est maintenue dans les câbles contenant les fils. En général, on dispose des bouchons d'étanchéité de part et d'autre du contenant de façon à interdire toute surpression dans celui-ci tandis que la continuité pneumatique du câble est assurée par un pontage. Cette disposition présente deux inconvénients principaux: tout d'abord, les bochons d'étanchéité ne sont jamais parfaits et peuvent se détériorer au cours du temps. Ainsi, la pression peut augmenter dans le contenant et atteindre une valeur telle que celui-ci est endommagé et, dans le cas d'un contenant immergé, l'étanchéité à l'eau n'est plus assurée. D'autre part, en cas de fuite, l'eau rentre à l'intérieur du contenant, endommageant les bobines de Pupin ou les répéteurs-régénérateurs sans que la moindre alarme du système pneumatique soit déclenchée.

La présente invention a justement pour objet un dispositif qui remédie à ces inconvénients en protégeant le contenant contre une surpression accidentelle due à un mauvais état des bouchons d'étanchéité tout en empêchant l'eau de pénétrer à l'intérieur du contenant en cas de fuite accidentelle.

Selon la principale caractéristique du dispositif objet de l'invention, ce dispositif est caracterisé en ce qu'il comprend une soupape permettant au gaz situé à l'intérieur du contenant de s'échapper, la soupape et le détendeur étant placés dans la poche d'air se trouvant à la partie supérieure d'une cloche.

Ce qui est dangereux pour le contenant n'est pas tant une forte pression à l'intérieur de celui-ci qu'une trop grande différence de pression entre l'intérieur et l'extérieur. Le rôle du détendeur est d'alimenter le contenant en gaz sous pression afin de créer une légère surpression, compatible avec les caractéristiques mécaniques du contenant, entre l'intérieur et l'extérieur de celui-ci. Ainsi, en cas de fuite lorsque le contenant est immergé, c'est l'air que s'échappe a l'extérieur, et non l'eau qui pénètre à l'intérieur. Quant à la soupape, elle à pour rôle de laisser échapper le gaz présent dans le contenant au cas où cette surpression dépasserait la valeur maximale admise.

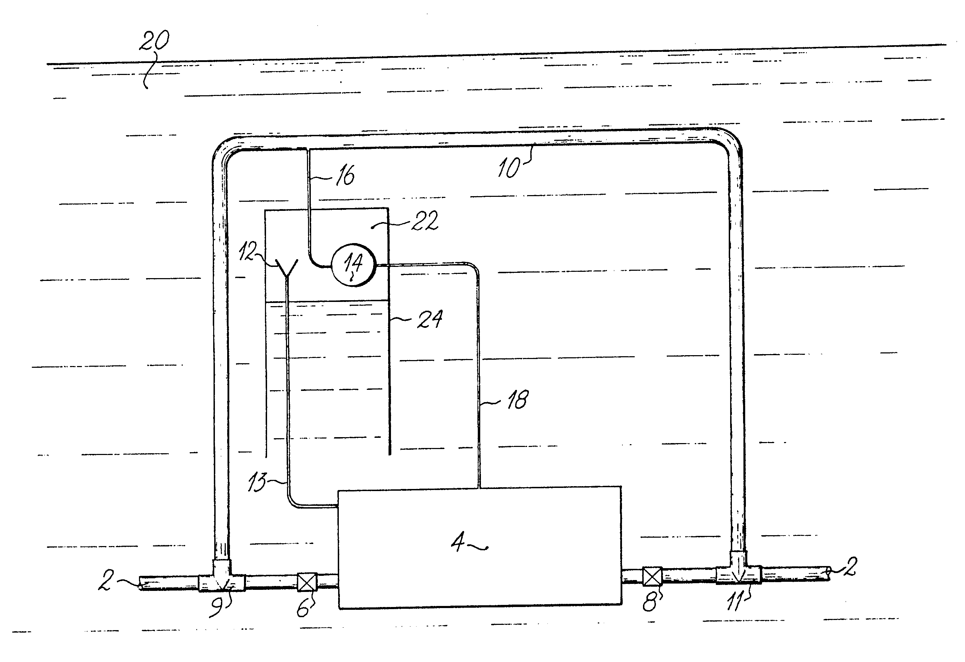

L'invention apparaîtra mieux à la lecture de la description qui va suivre, donnée à titre d'exemple purement illustratif et nullement limitatif, en référence au dessin annexé, lequel comporte une figure unique représentant une vue schématique du dispositif objet de l'invention.

Sur la figure, on voit un câble pressurisé 2 équipé d'un contenant 4 dans lequel se trouve un dispositif tel par exemple qu'une bobine de Pupin (non représentée). De manière classique, le contenant 4 est protégé contre la forte pression régnant dans le câble 2 par deux bouchons d'étanchéité référencés 6 et 8. La continuité pneumatique du câble 2 est assurée par une dérivation ou pontage 10 relié au câble par deux branchements 9 et 11 situés en des endroits tels que les bouchons d'étanchéité 6 et 8 se trouvent entre le contenant 4 et les branchements 9 et 11 respectivement.

Sur la figure, on voit encore une soupape 12 reliée au contenant 4 par une conduite 13 et permettant l'échappement éventuel du gaz présent dans celui-ci tandis qu'un détendeur 14 est relié d'une part au pontage 10 par une conduite 16 et d'autre part au contenant 4 par une conduite 18. Il sert à alimenter le contenant à l'aide du gaz sous pression présent dans le pontage 10 afin que la pression dans le contenant soit légèrement supérieure à la pression qui règne dans le milieu ambiant. Dans l'exemple décrit ici, ce milieu est une masse d'eau 20 dont la hauteur peut atteindre plusieurs mètres. On voit encore que la soupape 12 et le détendeur 14 sont placés dans la poche d'air 22 qui se trouve à la partie supérieure d'une cloche immergée 24 dont le rôle va maintenant être cécrit plus en détail.

Tout d'abord, elle sert à protéger la soupape et le détendeur contre d'éventuelles détériorations qui risquent de se produire lorsque l'eau est sale ou boueuse. D'autre part, le fait que la soupape et le détendeur soient placés dans la poche d'air de la cloche 24 fait que la surpression à l'intérieur du contenant 4 est constamment maintenue entre une limite inférieure et une limite supérieure fixées une fois pour toutes quelle que soit la hauteur de la masse d'eau 20, et donc la pression exercée par celle-ci.

Pour mémoire, on rappelle qu'une cloche telle que 24 est un récipient cylindrique ouvert à son extrémité inférieure et fermé à son extrémité supérieure. Lorsque le niveau de la masse d'eau 20 est en-dessous de l'ouverture de la cloche, la pression de l'air à l'intérieur de celle-ci est égale à la pression atmosphérique. La cloche étant fixe, lorsque le niveau de l'eau monte, il se forme à l'intérieur une poche d'air 22 dont la pression est égale à la pression atmosphérique augmentée de la pression due à la hauteur de la masse d'eau 20 comptée entre la surface libre de celle-ci et un niveau égal à celui de la surface libre de l'eau à l'intérieur de la cloche 24. Comme la cloche 24 est placée très près du contenant 4 et que, par conséquent, la hauteur de l'eau dans la cloche est faible par rapport à la hauteur de la masse 20, la pression de la poche d'air 22 est voisine de la pression régnant dans l'eau au voisinage immédiat du contenant.

Le détendeur 14, alimenté par l'air présent dans le pontage 10, est réglé pour assurer à l'intérieur du contenant une surpression déterminée par rapport au milieu ambiant, par exemple 50 millibars. Ainsi, en cas de fuite due à un percement des parois, la pression à l'intérieur du contenant 4 étant supérieure à celle du milieu ambiant, c'est le gaz présent à l'intérieur qui s'échappe dans l'eau et non l'inverse: ceci évite une détérioration des dispositifs placés dans le contenant. D'autre part, la soupape 12 est réglée pour ne s'ouvrir que si la pression à l'intérieur de la conduite 13, et donc à l'intérieur du contenant 4, est supérieure d'une valeur déterminée par exemple 100 millibars à la pression régnant dans la poche d'air 22, c'est-à-dire pratiquement à la pression régnant dans l'eau autour du contenant 4. Ainsi, le détendeur 14 et la soupape 12 assurent, quelle que soit la hauteur de la masse d'eau 20, et donc la pression exercée par celle-ci, une surpression à l'intérieur du contenant 4 qui reste constamment entre deux limites déterminées à l'avance.

On voit donc que le dispositif selon l'invention présente de nombreux avantages, puisqu'il permet de protéger sûrement et efficacement un contenant 4, même de technologie ancienne, contre une surpression accidentelle due, par exemple, à une détérioration des bouchons d'étanchéité 6 et 8. Le contenant est également protégé contre des infiltrations d'eau consécutives à une fuite accidentelle. Dans les deux cas, on pourra détecter l'anomalie par l'observation d'une baisse de pression ou une augmentation de débit dans le câble 2 ou dans le pontage 10. Enfin, dans le cas le plus fréquent où le dispositif est immergé dans l'eau, son fonctionnement n'est pas modifié par des variations éventuelles de la hauteur de la masse d'eau.

## Revendication

Dispositif permettant d'assurer une légère surpression, par rapport à un milieu ambiant, d'un contenant (4) relié à un câble pressurisé (2), lorsque ce contenant n'admet pas une surpression égale à celle du câble, ledit contenant étant protégé contre la pression régnant à l'intérieur du câble (2) par des bouchons d'étanchéité (6, 8), la continuité pneumatique du câble (2) étant assurée grâce à un pontage (10) et la surpression dans le contenant étant déterminée par un détendeur (14) servant à alimenter le contenant (4) à l'aide du gaz présent dans le pontage (10), caractérisé en ce qu'il comprend une soupape (12) permettant au gaz situé à l'intérieur du contenant (4) de s'échapper la soupape (12) et le détendeur (14) étant placés dans la poche d'air (22) située à la partie supérieure d'une cloche (24).

## Patentanspruch

Vorrichtung, welche einen leichten Überdruck im Vergleich zu einem umgebenden Milieu, eines mit einem Druckkabel verbundenen Behälters zu gewährleisten gestattet, falls dieser Behälter einen dem des Kabels gleichen Überdruck nicht zuläßt, wobei der Behälter durch Dichtungsstopfen (6, 8) vor dem im Inneren des Kabels (2) herrschenden Druck geschützt ist, die pneumatische Kontinuität des Kabels (2) durch eine Überbrückung (10) gewährleistet ist und der Überdruck im Behälter (4) durch ein Druckminderorgan (14) bestimmt ist, welches dazu dient, den Behälter (4) mit in der Überbrückung (10) vorhandenem Gas zu speisen, dadurch gekennzeichnet, daß sie ein Ventil (12) aufweist, welches das Entweichen von im Behälter (10) vorhandenem Gas gestattet, und daß das Ventil (12) und das Druckminderorgan (14) in einem im oberen Teil einer Glocke (24) eingeschlossenen Luftraum (22) angeordnet sind.

## Claim

Apparatus for providing a slight overpressure with respect to an ambient medium, in a container (4) connected to a pressurized cable (2), when the container does not permit an overpressure equal to that of the cable, said container being protected against the pressure obtaining in the interior of the cable (2) by sealing plugs (6, 8), the pneumatic continuity of the cable (2) being ensured by a by-pass (10) and the overpressure in the container being determined by a relief-valve (14) acting to feed the container (4) from the gas present in the by-pass (10), characterized in that it comprises a valve (12) enabling gas located inside the container (4) to escape, the valve (12) and relief valve (14) being located in an air pocket (22) in the upper part of a bell (24).

20

2

11

8

6

9

10

16

22

14

12

13

24

18

4

2